# EUROPÄISCHE PATENTSCHRIFT

(11) **EP 0 881 107 B1**
(45) Veröffentlichungstag und Bekanntmachung des Hinweises auf die Patenterteilung: **20.02.2002**
(21) Anmeldenummer: 98108477.5
(22) Anmeldetag: 09.05.1998
(51) Int. Cl.: B60G 21/055

(54) **Fahrzeug, insbesondere Nutzfahrzeug**
Vehicle, in particular utility vehicle
Véhicule, notamment véhicule utilitaire

(30) Priorität: 31.05.1997 DE 19722961
(43) Veröffentlichungstag der Anmeldung: 02.12.1998
(73) Patentinhaber: DaimlerChrysler AG, 70567 Stuttgart (DE)
(72) Erfinder: Mauz, Uwe, 73730 Esslingen (DE); Mülbert, Klaus, 68165 Mannheim (DE)

(56) Entgegenhaltungen:
- DE-A- 4 013 670
- DE-A- 19 546 727
- US-A- 5 193 849
- PATENT ABSTRACTS OF JAPAN vol. 015, no. 085 (M-1087), 27. Februar 1991 (1991-02-27) & JP 02 303918 A (MAZDA MOTOR CORP), 17. Dezember 1990 (1990-12-17)

## Beschreibung

Die Erfindung betrifft ein Fahrzeug, insbesondere ein Nutzfahrzeug gemäß dem Oberbegriff des Anspruches 1.

In der Praxis sind Fahrzeuge, insbesondere Nutzfahrzeuge wie Omnibusse häufig luftgefedert ausgeführt, also bei entsprechender Niveauregelung mit Federelementen ausgeführt, die im Hinblick auf unterschiedliche Stützhöhen zwischen Achse und Aufbau in ihrer Länge veränderlich sind. Weiter ist es in der Praxis üblich, Fahrzeuge zur Beeinflußung ihres Wankverhaltens mit Wankstabilisatoren auszustatten, die üblicherweise in Draufsicht U-förmig ausgebildet sind und zwischen Aufbau und Achse angeordnet werden, wobei der Stabilisatorrücken drehbar am Aufbau oder an der Achse angelenkt ist und sich über die Arme meist unter Verwendung entsprechender Stützstreben auf dem jeweiligen Gegenstück, also der Achse oder dem Aufbau abstützt. Die Stützstreben sind dabei meist gelenkig an den Enden der Stabilisatorarme und dem jeweiligen Gegenstück abgestützt.

Insbesondere bei für den Personentransport eingesetzten Fahrzeugen, wie Omnibussen, aber unter Umständen auch bei sonstigen Fahrzeugen, wie beispielsweise Behindertenfahrzeugen ist es wünschenswert, daß das Fahrzeug einen möglichst tiefen Einstieg aufweist. Dies wird unter anderem dadurch ermöglicht, daß das Fahrzeug ganz oder teilweise abgesenkt wird.

Ein luftgefedertes Fahrzeug betrifft auch die nachveröffentlichte DE 19546727 A1. Um ein Gegeneinanderarbeiten von Niveauregelung und Stabilisator bei unbeladenem Fahrzeug und gewollter Schiefstellung des Fahrzeugaufbaus gegenüber der Fahrzeugachse innerhalb gewisser Toleranzgrenzen und bei völliger Entleerung einzelner Luftfedern zu vermeiden, wird bei diesem mit Luftfederung arbeitenden Fahrzeug für beladenen und unbeladenen Zustand mit unterschiedlichen Regelstrategien gearbeitet, nämlich mit einer Zwei-Messpunkt-Regelung, d.h. gesonderter Niveauerfassung und Regelung rechts- und linksseitig bei beladenem Fahrzeug, und einer Ein-Messpunkt-Regelung, d.h. getrennter Niveauerfassung rechts- und linksseitig, Mittelwertbildung und gemeinsamer Regelung rechts- und linksseitig bei unbeladenem Fahrzeug.

Ferner ist es aus der gattungsbildenden DE 4013670 A1 bekannt, für einen Omnibus, insbesondere einen Niederfluromnibus mit Luftfederung, als Einstieghilfe den Aufbau einseitig abzusenken, und zwar bei gleichzeitigem Anheben des Aufbaus auf der gegenüberliegenden Fahrzeugseite, so daß sich ein Drehmoment um eine im Bodenbereich des Aufbaus liegende Mittelachse ergibt, was zu einer zusätzlichen Belastung der zu entlüftenden, auf der abzusenkenden Fahrzeugseite liegenden Luftfedern führt und eine Beschleunigung des Absenkvorganges bewirken soll.

Durch die Erfindung soll eine solche Einstieghilfe bei Fahrzeugen der im Oberbegriff genannten Art realisiert werden, bei möglichst geringem Energiebedarf für die Niveauänderung sowie bei möglichst geringer Belastung der in Verbindung mit der Niveauänderung beaufschlagten bzw. von der Niveauänderung betroffenen Teile.

Gemäß der Erfindung wird dies durch die Merkmale des Anspruches 1 erreicht. Ausgangspunkt ist dabei eine Achsabstützung über Federelemente, die bezüglich ihrer Stützhöhe zwischen Achse und Aufbau veränderlich sind, bevorzugt Luftfederelemente. Es können aber auch Schraubfederelemente Verwendung finden, die beispielsweise bezüglich ihrer Stützbasis entsprechend höhenverstellbar sind, etwa durch einen entsprechenden Spindelantrieb. In Verbindung mit solchen bezüglich ihrer Stützhöhe veränderlichen Federelementen kann das Fahrzeug einseitig durch Verringerung der Stützhöhe der der entsprechenden Fahrzeuglängsseite zugeordneten Federelemente soweit abgesenkt werden, daß sich ein verringertes Einstiegsniveau ergibt. Diese einseitige Absenkung des Fahrzeuges ist gegenüber der Gesamtabsenkung des Fahrzeuges energiesparend und mit geringerem konstruktiven Aufwand realisierbar. Dem einseitigen Absenkvorgang wirkt aber, analog zum einseitigen Federn, der Stabilisator entgegen, so daß zumindest bei verhältnismäßig steifen Stabilisatoren die Größe der Absenkung eingeschränkt ist. Ferner sind mit der Absenkung auch hohe Belastungen in den Anlenkungen des Stabilisators aufzunehmen und karrosserie- und achsseitig abzufangen sind. Dies wird dadurch vermieden, daß der Stabilisator durch Freigabe in wenigstens einem seiner Anlenkpunkte zumindest begrenzt abschaltbar ist. Die Abschaltung ist dabei sowohl durch Freigabe in zumindest einem der karrosserieseitigen Anlenkpunkte möglich, wird bevorzugt aber einer der achsseitigen Anlenkungen der Stabilisatorarme zugeordnet, insbesondere durch entsprechende Ausgestaltung der jeweiligen Stützstrebe als längenveränderliches Stützelement. In bevorzugter Weise kann ein solches Stützelement durch einen hydraulischen oder pneumatischen Zylinder gebildet sein, der in Abhängigkeit von der jeweiligen Beaufschlagung in einer oder in beiden Endlagen blokierbar ist und der, beispielsweise drucklos geschaltet, zwischen den Endlagen frei beweglich ist.

Als Stützelement kann aber in einfachster Weise auch eine mechanische Stützstrebe dienen, die in ihrer Wirklänge entsprechend veränderbar ist, so beispielsweise bei Ausbildung als Hebelgestänge durch entsprechendes Ausknicken oder dergleichen.

In Abhängigkeit von der Art der Anlenkung des Stabilisators an Aufbau oder Achse und der Lage des Stützelementes zum Stabilisator kann der einseitig abgesenkten Stellung des Aufbaus durch Verkürzung oder Verlängerung des Stützelementes Rechnung getragen werden, wobei das längenveränderliche Stützelement sowohl auf der Fahrzeugseite, die abgesenkt wird, wie auf der Gegenseite dem jeweiligen Stabilisatorarm zugeordnet sein kann.

Weitere Einzelheiten und Merkmale der Erfindung sind den Unteransprüchen zu entnehmen. Ferner wird die Erfindung anhand eines Ausführungsbeispieles näher erläutert das eine besonders zweckmäßige Ausgestaltung in Verbindung mit der Vorderachse und der Hinterachse eines Omnibusses zeigt. Im Einzelnen sind in den Figuren dargestellt:
- Figur 1: eine perspektifische und schematisierte Darstellung einer Vorderachse eines Omnibusses,
- Figur 2: eine Seitenansicht der Vorderachse gemäß Figur 1 in Richtung des Pfeiles II,
- Figur 3: in einer der Figur 1 entsprechenden Darstellung die Hinterachse des Omnibusses, und
- Figur 4: eine Seitenansicht der Hinterachse gemäß Figur 3, teilweise geschnitten, in Richtung des Pfeiles IV, in einem gegenüber der Darstellung gemäß Figur 3 vergrößerten Maßstab.

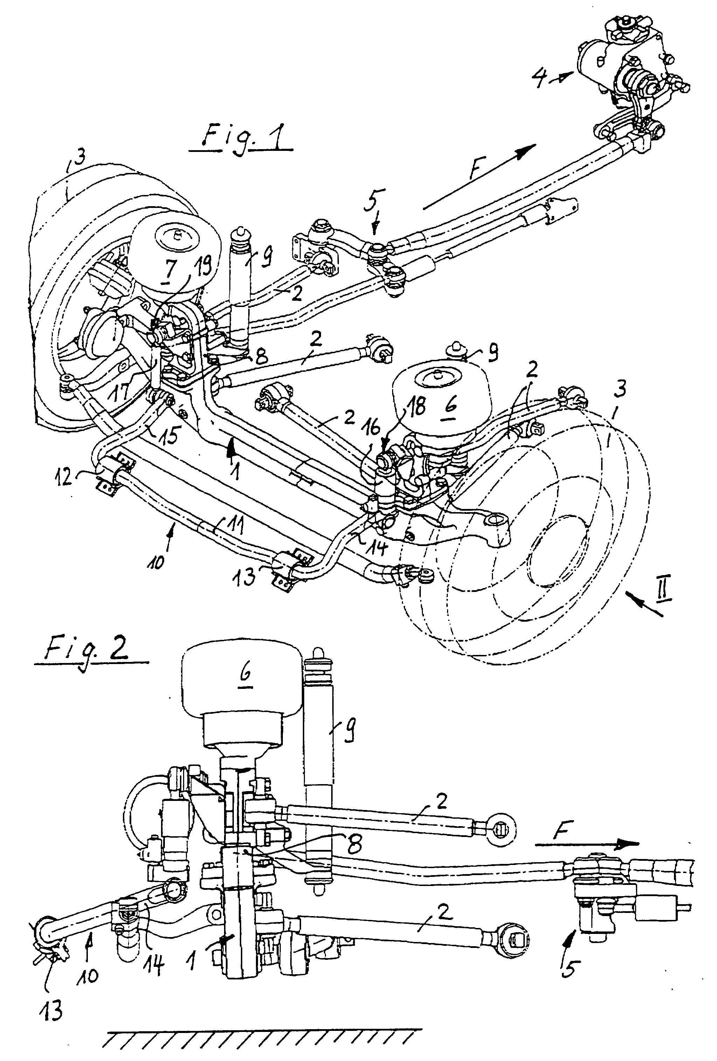

In den Figuren 1 bis 4 sind die Vorderachse und die Hinterachse eines ansonsten nicht gezeigten Omnibusses dargestellt, wobei diese Achsen in ihrem Zusammenwirken insbesondere auch hinsichtlich des erfindungsgemäßen Effektes der einseitigen Absenkung des Fahrzeuges beim Einstieg sowohl als Einzelaggregate, insbesondere aber in ihrer Kombination besondere Vorteile bieten und ein niedriges Niveau des Omnibusses, vor allen Dingen aber die Möglichkeit eines besonders tiefen einseitigen Absenkens zum Erleichtern des Einstiegs über eine Längsseite des Fahrzeuges ermöglichen. In den Darstellungen gemaß Figuren 1 und 2, die die Vorderachse des Fahrzeuges zeigen, ist der Achskörper mit 1 bezeichnet. Die Führung des Achskörpers 1 gegenüber dem Aufbau erfolgt in nicht naher beschriebener Weise über Lenker 2, die bezogen auf die Fahrtrichtung F vor dem Achskörper 1 liegen und die Längs- und Querführung des Achskörpers 1 übernehmen, an dem die Räder 3 in nicht näher dargestellter Weise verschwenkbar angelenkt sind. Bei 4 ist das Lenkgetriebe in nicht näher dargestellter Weise, ebenfalls in Fahrtrichtung F vor dem Achskörper 1 liegend, mit dem Aufbau verbunden, und die Verbindung des Lenkgetriebes 4 mit den lenkbaren Rädern 3 erfolgt über das Lenkgestänge 5. In Hochrichtung ist der Achskörper über Luftfedern 6 und 7 gegenüber dem nicht weiter gezeigten Aufbau abgestützt, wobei die Luftfedern auf Federkonsolen 8 sitzen und parallel zu den Luftfedern 6, 7 jeweils Stoßdämpfer 9 angeordnet sind.

Bezogen auf die Fahrtrichtung F hinter dem Achskörper 1 ist ein Drehstabstabilisator 10 angeordnet, der in Draufsicht U-förmig ausgebildet ist und der im Bereich seines Rückens 11 am nicht dargestellten Aufbau drehbar befestigt ist. Die Befestigung erfolgt über Lager 12 und 13, die angrenzend an die Arme 14 und 15, also nahe den seitlichen Enden des Rückens 11 angeordnet sind. Die Arme 14 und 15 des Stabilisators sind jeweils im Bereich ihrer freien Enden gelenkig mit einem Stützelement verbunden, wobei das Stützelement, das mit dem Arm 14 verbunden ist, durch einen längenverstellbaren Zylinder 16 gebildet ist, während das andere Stützelement durch eine Stützstrebe 17 gebildet ist, die in sich starr ist. Die Stützelemente sind ihrerseits jeweils an ihren von den Armen 14 und 15 abgelegenen Enden gelenkig an der Federkonsole 8 des Achskörpers 1 befestigt, wobei die entsprechenden Anlenkungen mit 18 und 19 bezeichnet sind. Ausgehend von den Anlenkungen 18 und 19 sind die als Stellzylinder 16 bzw. Stützstrebe 17 ausgebildeten Stützelemente hängend angeordnet, erstrecken sich also nach unten gegen die Arme 14 und 15.

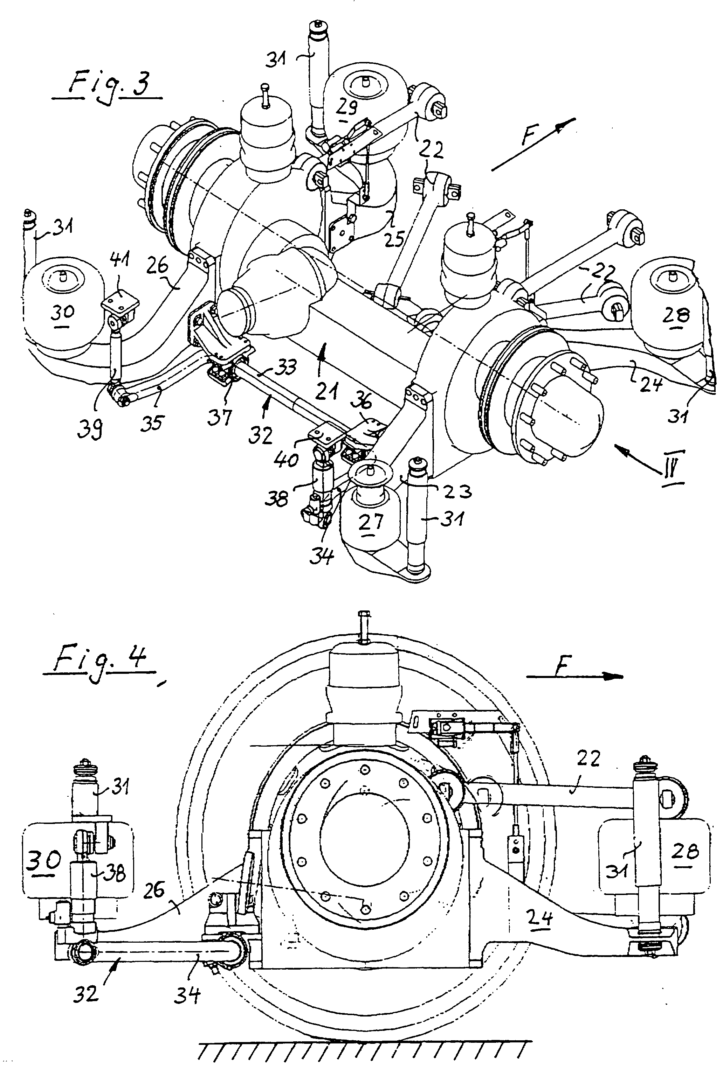

Die in den Figuren 3 und 4 dargestellte Hinterachse weist einen Achskörper 21 auf, der über Lenker 22, die in nicht dargestellter Weise am Fahrzeugaufbau angelenkt sind, gegenüber dem Fahrzeugaufbau geführt ist. Bezogen auf die Fahrtrichtung F sind am Achskörper 21 sich nach vorne bzw. hinten erstreckend Federkonsolen 23 bis 26 befestigt, die je eine Luftfeder 27 bis 30 tragen, wobei im Bereich der Luftfedern 27 bis 30 auch jeweils ein Stoßdämpfer 31 angeordnet ist.

Zwischen den bezogen auf die Fahrtrichtung F rückwärtigen Federkonsolen 23 und 26 liegt der Stabilisator 32, der U-förmig ausgebildet ist und einen Rücken 33 sowie Arme 34 und 35 aufweist. Der Stabilisator 32 ist im Bereich des Rückens 33 nahe den Armen 34 und 35 über Lager 36 und 37 an den Konsolen 23 und 26, und damit am Achskörper 21 befestigt und stützt sich über seine Arme 34 und 35 gegenüber dem nicht dargestellten Aufbau ab, und zwar über Stützelemente, von denen das eine Stützelement wiederum durch einen Stellzylinder 38 gebildet ist, während das andere Stützelement eine in sich starre Stützstrebe 39 ist. Die Stützelemente, die gelenkig an den Armen 34 und 35 angelenkt sind, sind an ihren von den Armen 34 und 35 abgelegenen Enden über Anlenkungen 40 und 41 am Aufbau befestigt.

Wird das Fahrzeug zur Erleichterung des Einstiegs an seiner bezogen auf die Fahrzeugrichtung F rechten Seite abgesenkt, so werden hierfür die Luftfedern 6 bzw. 27 und 28 der Vorderachse und der Hinterachse in ihrem Druck entsprechend abgesenkt. Diese Absenkung bedeutet, gleichbleibende Länge der als Stellzylinder 16, 38 und Stützstreben 17,39 ausgebildeten Stützelemente unterstellt, eine Verwindung der jeweiligen Stabilisatoren 10 bzw. 32. Da diese dem Absenkvorgang entgegenwirken sowie unerwünschte Aufbaubelastungen nach sich ziehen würde, sind die im gezeigten Ausführungsbeispiel der abgesenkten Seite des Aufbaus zugeordneten Stützelemente als Stellzylinder 16, 38 längenverstellbar ausgeführt, und zwar beispielsweise als hydraulisch oder pneumatisch längenverstellbare Zylinder. Wird der Druck in den Stellzylindern 16, 38 bevorzugt parallel zur Druckentlastung der Luftfedern 6, 27 und 28 beim Absenken der rechten Fahrzeugseite abgebaut, so sind die Zylinder 16, 38 frei längenverstellbar, und die Stabilisatoren 10 bzw. 32 sind dadurch freigegeben. In Verbindung mit der Absenkung wird dabei der der Vorderachse als Stützelement zugeordnete Stellzylinder 16 ausgefahren, d.h. verlängert, da der Stabilisator 10 am Aufbau befestigt ist und entsprechend der Neigung des Aufbaus ebenfalls geneigt wird, so daß der Stabilisatorarm 14 gegenüber dem Stabilisatorarm 15 unter Beibehaltung der Erstreckungsrichtung nach unten abgesenkt wird.

Für den Stellzylinder 38, der der Hinterachse als Stützelement zugeordnet ist, ergibt sich im Gegensatz zur Situation bei der Vorderachse eine Verkürzung, da der Stabilisator 32 dem Achskörper 21 zugeordnet ist und somit unabhängig von der Lage des Aufbaus für seinen Rücken 33 eine unveränderte Lage beibehält. Beim Absenken des Aufbaus auf der bezogen auf die Fahrtrichtung rechten Seite wird aber die Anlenkung 40 entsprechend der Neigung des Aufbaues nach unten gedrückt, so daß das Stellzylinder 38 zusammengefahren wird.

Bei der vorgeschilderten Beschreibung ist der Einfachheit halber davon ausgegangen, daß bei der einseitigen Absenkung die gegenüberliegende Seite des Aufbaus ihre Höhenlage beibehalten würde. Für die Praxis ist dies nicht zutreffend, da in Analogie zum einseitigen Federn der Absenkvorgang sich bezüglich des Aufbaus als eine Wankbewegung um eine Fahrzeuglängsachse darstellt, bei der der Absenkung auf der einen Seite ein Anheben auf der Gegenseite entspricht. Für die geschilderte Verlängerung oder Verkürzung des jeweiligen als Stellzylinder 16, 38 ausgebildeten Stützelementes ist dies aber, wie erkennbar, ohne Bedeutung.

Aufgrund der geschilderten Gegebenheiten ist ersichtlich, daß die längenveränderlichen Stützelemente auch dem jeweils anderen Arm des Stabilisators zugeordnet sein könnten d.h. auf der bezogen auf die Fahrtrichtung anderen Seite angeordnet werden könnten, mit dem Effekt, daß dann bezogen auf die Gegebenheiten in Figur 1 beim Absenken eine Verkürzung des Stützelementes, und bezogen auf die Gegebenheiten in Figur 3 eine Verlängerung des Stützelementes stattfinden müßte, wenn der Stabilisator beim Absenken freigegeben wird. Entsprechende Umkehrungen ergeben sich auch, wenn die Stützelemente nicht hängend, wie in den Ausführungsbeispielen gezeigt, sondern stehend angeordnet werden. Die erfindungsgemäße Bauweise, wie sie anhand der Figuren 1 bis 4 erläutert ist, erweist sich in ihrer Kombination aber als besonders zweckmäßig und ermöglicht einen geringen Raumbedarf und eine tiefe Bodenlage des Fahrzeuges.

## Patentansprüche

1. Fahrzeug, insbesondere Nutzfahrzeug, mit über bezüglich seiner Stützhöhe zwischen Achse und Aufbau veränderlichen Federelementen und zwischen Aufbau und Achse angeordnetem Wankstabilisator, wobei das Fahrzeug einseitig durch Verringern der Stützhöhe der dieser Fahrzeuglängsseite zugeordneten Federlemente (Luftfedern 6, 27 und 28) absenkbar ist,
**dadurch gekennzeichnet,**
**daß** der Stabilisator (10, 32) durch Freigabe in einem seiner Anlenkpunkte zumindest begrenzt abschaltbar ist.

2. Fahrzeug nach Anspruch 1,
**dadurch gekennzeichnet,**
**daß** als Federelemente Luftfedern (6, 7, 27, 28, 29, 30) vorgesehen sind.

3. Fahrzeug nach Anspruch 1 oder 2,
**dadurch gekennzeichnet,**
**daß** der Stabilisator (10, 32) U-Form aufweist und in der Anlenkung eines seiner Stabilisatorarme (14 bzw. 34) gegenüber Aufbau oder Achse abschaltbar ist.

4. Fahrzeug nach Anspruch 3,
**dadurch gekennzeichnet,**
**daß** die Anlenkung des Stabilisators (10, 32) bezüglich eines seiner Stabilisatorarme (14 bzw. 34) gegenüber Aufbau oder Achse ein längenveränderliches Stützelement

5. Fahrzeug nach Anspruch 4,
**dadurch gekennzeichnet,**
**daß** als Stützelement ein teleskopischer Stellzylinder (16 bzw. 38) vorgesehen ist.

6. Fahrzeug nach Anspruch 5,
**dadurch gekennzeichnet,**
**daß** der Stellzylinder (16 bzw. 38) fluidisch beaufschlagbar und in einer Schaltstellung frei längenveränderlich ist.

7. Fahrzeug nach einem der Ansprüche 4 bist 6,
**dadurch gekennzeichnet,**
**daß** das als Stellzylinder (38) ausgebildete Stützelement beim einseitigen Absenken des Aufbaues auf Druck beaufschlagt ist.

8. Fahrzeug nach einem der Ansprüche 4 bis 6,
**dadurch gekennzeichnet,**
**daß** das als Stellzylinder (16) ausgebildete Stützelement beim einseitigen Absenken des Aufbaues auf Zug beaufschlagt ist.

9. Fahrzeug nach einem der vorhergehenden Ansprüche,
**dadurch gekennzeichnet,**
**daß** der Stellzylinder (16) hängend an der Achse abgestützt ist.

10. Fahrzeug nach einem der Ansprüche 1 bis 8,
**dadurch gekennzeichnet,**
**daß** der Stellzylinder (16) stehend an der Achse befestigt ist.

11. Fahrzeug nach einem der Ansprüche 1 bis 8,
**dadurch gekennzeichnet,**
**daß** der Stellzylinder (38) hängend am Aufbau befestigt ist.

12. Fahrzeug nach einem der Ansprüche 1 bis 8,
**dadurch gekennzeichnet,**
**daß** der Stellzylinder (38) stehend am Aufbau befestigt ist.

13. Fahrzeug nach einem der vorhergehenden Ansprüche,
**dadurch gekennzeichnet,**
**daß** das längenveränderliche Stützelement der absenkbaren Fahrzeuglängsseite zugeordnet ist.

14. Fahrzeug nach einem der Ansprüche 1 bis 12,
**dadurch gekennzeichnet,**
**daß** das längsveränderliche Stützelement gegenüberliegend zur absenkbaren Fahrzeuglängsseite angeordnet ist.

## Claims

1. A vehicle, in particular a utility vehicle, with spring elements which can be adjusted in terms of the supporting height between the axle and the bodywork and a roll stabiliser positioned between the bodywork and the axle, it being possible to lower one side of the vehicle by reducing the supporting height of the spring elements connected to this side of the vehicle (pneumatic springs 6, 27 and 28),
**characterised in that**
the stabiliser (10, 32) can be disabled at one of its link points to a limited extent at least by being released.

2. A vehicle in accordance with claim 1,
**characterised in that**
pneumatic springs (6, 7, 27, 28, 29, 30) are provided as the spring elements.

3. A vehicle in accordance with claim 1 or 2,
**characterised in that**
the stabiliser (10, 32) is U-shaped and can be disabled at the link between one of its stabiliser arms (14/34) and the bodywork or the axle.

4. A vehicle in accordance with claim 3,
**characterised in that**
the link between one of the stabiliser arms (14/34) of the stabiliser (10, 32) and the body work or the axle comprises a length-adjustable supporting element.

5. A vehicle in accordance with claim 4,
**characterised in that**
a telescopic control cylinder (16/38) is provided as the supporting element.

6. A vehicle n accordance with claim 5,
**characterised in that**
the control cylinder (16/38) can be put under load by means of a fluid and in an adjusting position can be adjusted to any length.

7. A vehicle in accordance with one of claims 4 to 6,
**characterised in that**
the supporting element which is designed as a control cylinder (38) is put under pressure when one side of the bodywork is lowered.

8. A vehicle in accordance with one of claims 4 to 6,
**characterised in that**
the supporting element which is designed as a control cylinder (16) is put under tension when one side of the bodywork is lowered.

9. A vehicle in accordance with one of the preceding claims,
**characterised in that**
the control cylinder (16) is supported hanging from the axle.

10. A vehicle in accordance with one of claims 1 to 8,
**characterised in that**
the control cylinder (16) is fixed standing on the axle.

11. A vehicle in accordance with one of claims 1 to 8,
**characterised in that**
the control cylinder (38) is fixed hanging from the bodywork.

12. A vehicle in accordance with one of claims 1 to 8,
**characterised in that**
the control cylinder (38) is fixed standing on the bodywork.

13. A vehicle in accordance with one of the preceding claims,
**characterised in that**
the length-adjustable supporting element is connected to the lowerable side of the vehicle.

14. A vehicle in accordance with one of claims 1 to 12,
**characterised in that**
the length-adjustable supporting element is positioned opposite the lowerable side of the vehicle.

## Revendications

1. Véhicule, en particulier véhicule utilitaire, comprenant un stabilisateur au roulis agencé entre la carrosserie et l'essieu via des éléments de suspension variables par rapport à sa hauteur de soutien entre l'essieu et la carrosserie, le véhicule étant susceptible d'être abaissé d'un côté en réduisant la hauteur de soutien des éléments de suspension (amortisseurs pneumatiques 6, 27 et 28) associés à ce côté longitudinal du véhicule, **caractérisé en ce que** le stabilisateur (10, 32) peut être neutralisé de manière au moins limitée par libération dans l'un de ses points d'articulation.

2. Véhicule selon la revendication 1, **caractérisé en ce que** des amortisseurs pneumatiques (6, 7, 27, 28, 29, 30) sont prévus à titre d'éléments de suspension.

3. Véhicule selon l'une ou l'autre des revendications 1 et 2, **caractérisé en ce que** le stabilisateur (10, 32) présente une forme de U et peut être neutralisé dans l'articulation de l'un de ses bras de stabilisateur (14, 34) par rapport à la carrosserie ou à l'essieu.

4. Véhicule selon la revendication 3, **caractérisé en ce que** l'articulation du stabilisateur (10, 32) par rapport à l'un de ses bras de stabilisateur (14, 34) par rapport à la carrosserie ou à l'essieu comprend un élément de soutien de longueur variable.

5. Véhicule selon la revendication 4, **caractérisé en ce qu'**un vérin télescopique (16, 38) est prévu à titre d'élément de soutien.

6. Véhicule selon la revendication 5, **caractérisé en ce que** le vérin (16,38) peut être alimenté en fluide et est librement variable en longueur dans une position de commutation.

7. Véhicule selon l'une quelconque des revendications 4 à 6, **caractérisé en ce que** l'élément de soutien réalisé sous forme de vérin (38) est alimenté par pression lors de l'abaissement unilatéral de la carrosserie.

8. Véhicule selon l'une quelconque des revendications 4 à 6, **caractérisé en ce que** l'élément de soutien réalisé sous forme de vérin (16) est alimenté par traction lors de l'abaissement unilatéral de la carrosserie.

9. Véhicule selon l'une quelconque des revendications précédentes, **caractérisé en ce que** le vérin (38) est soutenu en suspension sur l'essieu.

10. Véhicule selon l'une quelconque des revendications 1 à 8, **caractérisé en ce que** le vérin (16) est fixé dressé sur l'essieu.

11. Véhicule selon l'une quelconque des revendications 1 à 8, **caractérisé en ce que** le vérin (38) est fixé suspendu à la carrosserie.

12. Véhicule selon l'une quelconque des revendications 1 à 8, **caractérisé en ce que** le vérin (38) est fixé dressé sur l'axe.

13. Véhicule selon l'une quelconque des revendications précédentes, **caractérisé en ce que** l'élément de soutien variable en longueur est associé au côté longitudinal abaissable du véhicule.

14. Véhicule selon l'une quelconque des revendications 1 à 12, **caractérisé en ce que** l'élément de soutien variable en longueur est agencé à l'opposé du côté longitudinal abaissable du véhicule.
